# FASCICULE DE BREVET EUROPEEN

(11) **EP 3 261 867 B1**
(45) Date de publication et mention de la délivrance du brevet: **06.10.2021**
(21) Numéro de dépôt: 16715092.9
(22) Date de dépôt: 26.02.2016
(51) Int. Cl.: B60K 1/04, B62D 23/00, B62D 29/04, B62D 61/06

(54) **VÉHICULE MONOPLACE ÉLECTRIQUE**
ELEKTRISCHES EINSITZERFAHRZEUG
ELECTRIC SINGLE-SEATER VEHICLE

(30) Priorité: 28.02.2015 WO PCT/IB2015/051486
(43) Date de publication de la demande: 03.01.2018
(73) Titulaire: Aventor SA, 2520 La Neuveville (CH)
(72) Inventeur: THULIEZ, Jean-Luc, 2525 Le Landeron (CH); CROZIER, Etienne, 2520 La Neuveville (CH); OBLIGER, Nicolas, 70150 Pin (FR); HEISEL, Guillaume, 2503 Bienne (CH); ROMAND, Damien, 2515 Prêles (CH)
(74) Mandataire: Grosfillier, Philippe
(86) Numéro de dépôt international: PCT/IB2016/051070
(87) Numéro de publication internationale: WO 2016/135691

(56) Documents cités:
- EP-B1- 0 854 818
- EP-B1- 0 854 818
- EP-B1- 0 854 818
- WO-A1-2011/010651
- AU-A1- 2008 200 543
- CN-B- 102 009 692
- CN-B- 102 009 692
- DE-A1-102009 048 573
- DE-A1-102009 048 573
- DE-A1-102011 001 861
- DE-A1-102011 001 861
- FR-A1- 2 769 876
- FR-A1- 2 769 876
- FR-A3- 2 925 447
- GB-A- 2 494 269
- GB-A- 2 494 269
- US-A1- 2005 274 556

## Description

### Domaine de l'invention

La présente invention concerne les véhicules à propulsion électrique. Elle concerne plus précisément l'architecture des véhicules de sport monoplace à propulsion électrique.

### Etat de la technique

L'utilisation de monoplaces à propulsion électrique, type Formule E, existe depuis plusieurs années. Dans ce type de véhicule le moteur thermique est remplacé par un moteur électrique et le réservoir de carburant par une batterie. L'architecture du véhicule correspond sensiblement à une voiture monoplace classique de type Formule 3 ou 1. Le châssis et la carrosserie sont constitués de structure en nid d'abeille, en composites carbone (tissus de carbone à matrice époxy), kevlar ou aluminium, le tout formant une coque. La première monoplace de ce type, est la F1 McLaren MP4 / 1 dessinée par John Barnard en 1981.

L'utilisation de matériaux composites comporte cependant plusieurs inconvénients qui sont brièvement décrits ci-dessous.

Impact environnemental : les composites sont réalisés à partir de tissus de fibres tissées (carbone, kevlar ou autres), imprégnés de matrice polymère thermodurcissable. Pour les véhicules de course, cette matrice est typiquement constituée d'une résine époxy et d'un durcisseur. La toxicité provient principalement des agents de durcissement et des produits chimiques qu'ils contiennent, BPA (Bisphénol A) ou MDA (4,4'-diaminodiphénylméthane) par exemple. Ces trois éléments ne sont plus conformes à la réglementation européenne REACH. La matrice polymère thermodurcissable, liquide avant moulage, change de structure durant sa mise en forme. Il se produit alors une réaction de polycondensation tridimensionnelle, irréversible, et qui empêche par définition tout recyclage des pièces ainsi produites.

Sécurité : Les composites époxyde carbones sont très rigides par rapport a leur masse, mais possèdent un allongement à la rupture très faible. Lors d'un crash, la structure composite dissipe l'énergie en créant des fissures et des fragments coupants. Cette fragmentation représente un danger direct pour les pilotes et les spectateurs sur les bords de pistes. Lors d'un accrochage en course, des morceaux de carbones coupants peuvent se détacher de la coque et se disperser sur sur la piste. Ces corps étrangers constituent également un danger pour les autres véhicules, en coupant notamment l'enveloppe des pneus, ce qui peut entraîner leur éclatement. Après chaque accrochage, les courses doivent être interrompues et la piste méticuleusement nettoyée.

Un autre problème de sécurité a pour cause le fait que les fibres des composites carbones conduisent l'électricité, ce qui est peu compatible avec les courants forts et les hauts voltages circulant dans les propulsions de voitures électriques. Un risque d'électrocution est important pour les pilotes, mais aussi pour les intervenants dans les stands et des équipements spéciaux isolants sont nécessaires.

Affichage statique : De par les renforts et la structure tridimensionnelle de leur matrice, les composites sont opaques dans le spectre visible, ce qui limite l'affichage de messages a un motif fixe du départ a la fin de la course ou de couleurs sur la coque. Un affichage dynamique, c.à.d. la possibilité de modifier l'information pendant une course, n'est donc pas possible avec les coques de l'état de la technique.

Coûts : les coques carbones sont produites à l'unité par infusion en autoclave sous vide. Le temps de fabrication est long, les investissements pour le matériel de transformation sont importants et l'énergie mise en jeu est coûteuse. Le contrôle unitaire des pièces engendre des coûts élevés. Au final le coût de ces véhicules de course est très élevé. Ce type de construction ultra légère est réservé aux voitures de course et à quelques « supercars » à diffusion limitée .

Dans les monoplaces électriques la batterie de stockage d'énergie est positionnée à l'arrière du pilote, en lieu et place du réservoir d'essence que l'on trouve dans les Formules 3 et Formules 1 sport proto. En cas de crash avant (qui représente une majorité des accidents pour les monoplaces), la décélération brusque induit un transfert de masse vers l'avant. Les batteries, dont la masse est importante, sont alors propulsées vers l'avant, directement dans le dos du pilote. Pour réduire ce risque la batterie peut être solidement arrimée en position fixe sur le châssis mais dans ce cas la masse de l'ensemble est augmentée, ce qui réduit les performances du véhicule.

Refroidissement batterie : Contrairement à un réservoir d'essence, la batterie d'un véhicule électrique est un stockage électro chimique d'énergie exothermique à l'utilisation. La batterie doit être refroidie et le centre de la monoplace est l'endroit le plus confiné et de ce fait le plus difficile à refroidir avec de l'air extérieur provenant de l'avancement du véhicule. Pour cette raison, dans certains véhicules électriques on recourt à un refroidissement des cellules de la batterie dans un bain huile diélectrique. Cette solution présente I avantage d'un refroidissement uniforme mais l'inconvénient d'augmenter la masse de l'ensemble, à cause de l'huile embarquée

La cellule composite carbone proprement dite absorbe l'énergie de choc en se désagrégeant. Elle est conçue comme une coque ultra rigide, très résistante en compression et en anti pénétration d'éléments extérieur. Ainsi sur tous les véhicules sportifs à coque de carbone, l'absorption d'énergie se fait principalement par la zone de crash cône avant, et les trapèzes de suspensions.

Les monoplaces de circuit de l'état de la technique étant des propulsions, les masses importantes comme le moteur, la batterie, la boite de vitesse, le différentiel et la transmission, sont situées à l'arrière du pilote. L'axe arrière supporte ainsi une masse plus importante que l'axe avant. A l'accélération, cette configuration est excellente pour passer la puissance, mais a tendance à déséquilibrer la voiture dans toutes les autres allures. Le contrôle par le pilote peut devenir difficile avec une voiture déjà déséquilibrée par conception

La publication EP 0 854 818 B1 décrit un véhicule routier ultra-léger.

La publication FR 2 925 447 A3 décrit un dispositif de positionnement d'un bac à batterie dans un véhicule et un véhicule comportant un tel dispositif.

La publication AU 2008 200 543 A1 décrit un système pour un véhicule électrique solaire.

La publication WO 2011/010651 A1 un système de chargement de véhicule électrique.

La publication US 2005/0274556 A1 décrit un châssis pour véhicule hybride avec un module de batterie qui peut être enlevé.

La publication GB 2494269 A1 décrit un châssis tubulaire pour un véhicule à trois roues.

La publication FR 2769876 A1 décrit un châssis-poutre pour un véhicule à propulsion électrique.

Les publications CN 102 009692B et DE 10 2011 001 861 A1 décrivent une structure de châssis pour véhicule.

La publication DE 10 2009 048 573 A1 décrit un véhicule à trois roues.

### Description générale de l'invention

La présente invention permet en particulier de remédier aux inconvénients mentionnés ci-dessus.

Elle concerne un véhicule monoplace purement électrique tel que défini dans la revendication indépendante 1. Les revendications dépendantes définissent des modes d'exécution particuliers de celle-ci.

Il va de soi que le véhicule peut également comprendre plusieurs batteries.

Le châssis peut être principalement réalisé en plaques d'aluminium ou en « plaques sandwich » p.ex. en composites thermoplastiques recyclables renforcés par des fibres, appelé aussi composites avancés qui offrent une meilleure rigidité et un produit recyclable. La carrosserie peut être constituée de 1, 2 à 3 pièces polymères, qui présentent l'avantage d'être électriquement isolants.

La ou les batteries sont de préférence situées dans une poutre, sous les jambes du pilote, afin d'obtenir une meilleure répartition de la masse entre le train avant et le train arrière. Avec une telle configuration la sécurité du pilote est également renforcée.

Un positionnement de la batterie à l'avant de la voiture, derrière le nez, permet une bonne ventilation de celle ci, la poutre servant de canal de refroidissement. L'air conduit à l'avant de la voiture peut ainsi avantageusement circuler dans la poutre autour du caisson de la batterie autour du pilote, puis extrait aérodynamiquement vers l'arrière de la voiture

La carrosserie est constituée de grandes pièces thermoplastiques, de préférence translucides, qui ont une bonne absorption d'énergie de choc et sont aisément recyclables. La carrosserie peut être constituée de pièces thermoplastiques souples, recyclables et possédant une élongation élevée la rupture.

Le polymère thermoplastique pour réaliser la carrosserie peut favorablement être transparent ou translucide.

Une telle architecture est similaire à l'architecture biologique du vivant, plus précisément celle des vertébrés. Le châssis rigide remplace le squelette et la carrosserie extérieure réalise la fonction de protection souple protégeant le squelette en cas de chocs.

De préférence, le châssis est constitué d'un ensemble de plaques et de profilés extrudés. Ces éléments peuvent être en aluminium et agencés afin de former des éléments poutres ou cage creux, ou en sandwich avec deux plaques relativement fines d'un matériau rigide encadrant une plaque relativement épaisse d'un matériau beaucoup plus flexible et pouvant être moussé. Ces deux types de construction permettent d'augmenter le moment d'inertie de ces éléments et donc la rigidité générale du châssis tout en limitant la masse de celui-ci. Les châssis des modèles 3 et 4 roues peuvent être totalement différents ou identiques, seul le train arrière présentant des différences.

Dans ce châssis, le pilote est de préférence positionné de manière à avoir un centre de gravité le plus bas possible. Le moteur est positionné derrière lui le plus bas possible également. La batterie est positionnée sous ses jambes, au ras du sol, encapsulée dans la structure poutre de l'avant du châssis. Cette configuration permet d'équilibrer les masses, d'abaisser le centre de gravité et le centre de giration, et d'obtenir un véhicule possédant un transfert de masse limité. La ou les batteries, placées en avant du bassin du pilote, permettent une meilleure répartition des masses, améliorant encore la stabilité de l'ensemble. Enfin, la batterie peut être déplacée d'avant en arrière dans la structure poutre afin d'ajuster la répartition des masses entre l'avant et l'arrière du véhicule en fonction de la masse du pilote et de son souhait sur le comportement survireur, sous-vireur, ou neutre de la monoplace. Cette répartition peut être définie de façon neutre non limitative pour avoir 50% de la masse sur le train avant, et 50% sur le train arrière. Une monoplace électrique ne changeant pas de masse en course, l'ensemble permet d'avoir un sentiment de facilité et de confiance qui permet au pilote de rechercher la limite en sécurité.

De préférence, la carrosserie est constituée d'une pièce principale et éventuellement de 1 à 3 pièces polymères. La carrosserie et les éléments de carrosserie sont réalisés dans un même polymère thermoplastique recyclable. Les pièces constitutives de la carrosserie peuvent être facilement démontées, re-broyées, et réutilisées pour faire une nouvelle carrosserie. Le déchet devient ainsi à nouveau matière première. Cette boucle de recyclage existe aussi sur les pièces de structure aluminium et composites avancés, qui peuvent être simplement démontées, sans mélanges de matériaux, identifiées, et envoyées à une station de recyclage. Ce principe, cumulé à des pièces de grands volumes, permet des boucles de recyclage. L'architecture décrite s'inscrit dans une « économie circulaire » (EC) qui décrit une économie industrielle dans laquelle les flux de matériaux continuent à circuler avec une qualité élevée (en ce qui concerne les propriétés, les fonctions et les diverses utilisations) après leur première utilisation, sans que ces matériaux entrent dans la biosphère. Conformément aux traités ratifiés par l'Allemagne, la Chine, et la confédération helvétique La voiture de sport ainsi conçue devient un vecteur de communication sur de l'économie circulaire.

Les matériaux utilisés pour la carrosserie peuvent être des bio-polymères, c'est-à-dire des polymères obtenus à partir de ressources renouvelables organique.

Les pièces de la carrosserie sont réalisées de façon avantageuse mais non limitative en roto-moulage ou roto-moussage. Ces technologies permettent d'obtenir des pièces constituées de deux peaux (une intérieure et une extérieure). Entre ces deux peaux, le cœur de la pièce est constitué soit d'air dans le cas du roto-moulage, soit de matière moussée dans le cas du roto-moussage, la partie moussée étant constituée du même polymère que la peau. Cette structure tri-couche, très proche de celle d'un os est utilisée avant tout pour absorber l'énergie en crash par déformation des pièces. Le roto-moulage ou le roto-moussage permettent en effet d'augmenter le moment d'inertie des parois de la carrosserie et donc ses performances de protection vis-à-vis du pilote, tout en limitant sa masse. Cette carrosserie est conçue pour pouvoir être utilisée sur les modèles 3 et 4 roues. Seule une pièce peut être ajoutée à l'arrière pour caréner les 2 roues arrière.

Des ailes latérales hautes sont intégrées à la carrosserie et moulées dans le même corps creux moussé. Ces ailes de sécurité permettent en se déformant d'absorber l'énergie en choc latéral, évitent aux voiture de se « chevaucher », évitant de monter les roues les unes sur les autres, et protège les pilotes des éventuels débris de suspensions dans les crashs.

Avantageusement, la cellule de survie du pilote est constituée d'un squelette rigide lui-même entourée d'une carrosserie souple qui absorbe l'énergie par déformation. Des éléments de structure rigides, poutre ou sandwich du châssis sont positionnés tout autour du pilote afin d'éviter toutes déformation de la cellule. Autour de ces éléments rigides, les épaisseurs importantes de la carrosserie permettent d'amortir et d'absorber une partie des chocs venant de l'extérieur et renforcent la protection contre l'intrusion, tout en évitant le détachement d'éclats pouvant être projetés sur le pilote.

Selon une variante de l'invention, les pièces de la carrosserie et de la carrosserie sont translucides et permettent par un rétro-éclairage de diffuser la lumière émise. Ce rétro-éclairage peut être de façon non limitative réalisé par l'emploi de LEDs placées à l'intérieur de la carrosserie. En agissant sur l'alimentation des LEDs, on peut ainsi modifier de façon visible la couleur de la carrosserie afin d'afficher, via un code couleur défini, des informations sur le véhicule ou le pilote. L'alimentation de ces LEDs, et donc la couleur diffusée par la carrosserie, peut être modifiées via des signaux venant des capteurs situés sur le moteur, batterie, pédales de frein, d'accélérateur, volant ou fréquence cardiaque du pilote, commandées par des signaux venant de l'extérieur. Ainsi les spectateurs peuvent obtenir des informations visuelles supplémentaires sur la course, les véhicules et les pilotes. Les autres pilotes peuvent également voir directement sur la carrosserie l'état des véhicules concurrents.

Ces signaux peuvent être de façon non limitative envoyés par les spectateurs via ondes radios, Hertziennes, Wifi, GSM ou Bluetooth afin d'apporter soutient et encouragement au pilote engagé dans la course. Par le même principe des messages d'annonceurs publicitaires peuvent entre diffusés pendant la course

Grâce à cette nouvelle architecture, une monoplace électrique devient plus légère, plus performante, plus efficace, plus facile à piloter, plus simple, moins chère à produire, plus sûre et offre des nouvelles possibilités d'affichage dynamique sur le véhicule. L'invention permet de produire des monoplaces conçues dans des matériaux recyclables, cohérents avec une propulsion électrique d'un point de vue empreinte carbone.

### Description détaillée de l'invention

La présente invention et ses avantages apparaîtront mieux dans la description ci-dessous d'un mode de réalisation donné à titre d'exemple non limitatif, en référence aux dessins annexés dans lesquels :

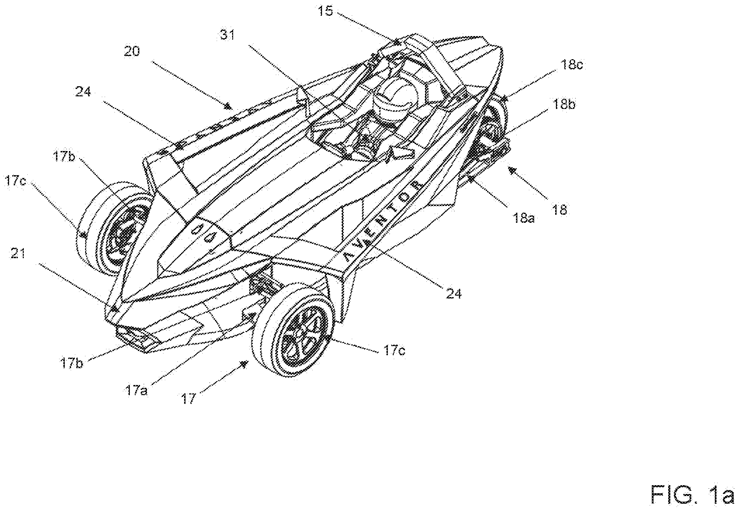

- la figure 1a représente une vue en perspective de la monoplace 3 roues,

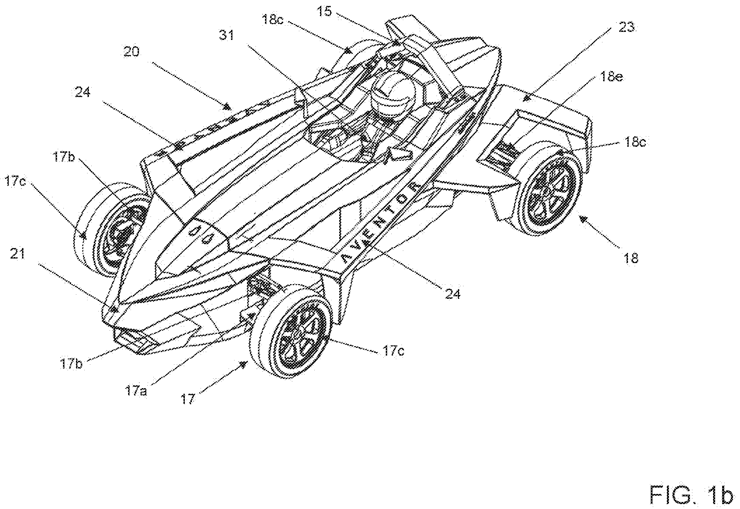

- la figure 1b représente une vue en perspective de la monoplace 4 roues,
- la figure 2a représente une vue en perspective de la monoplace 3 roues avec la carrosserie séparée du châssis,

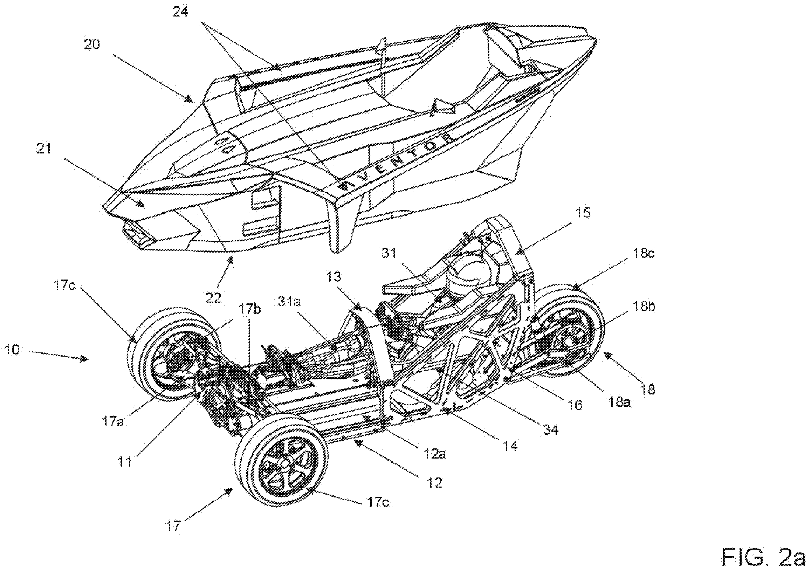

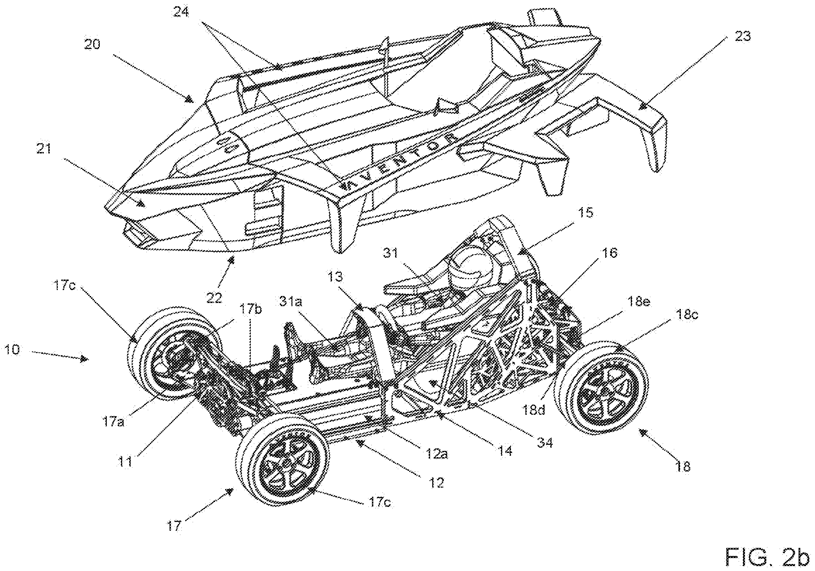

- la figure 2a représente une vue en perspective de la monoplace 4 roues avec la carrosserie séparée du châssis,

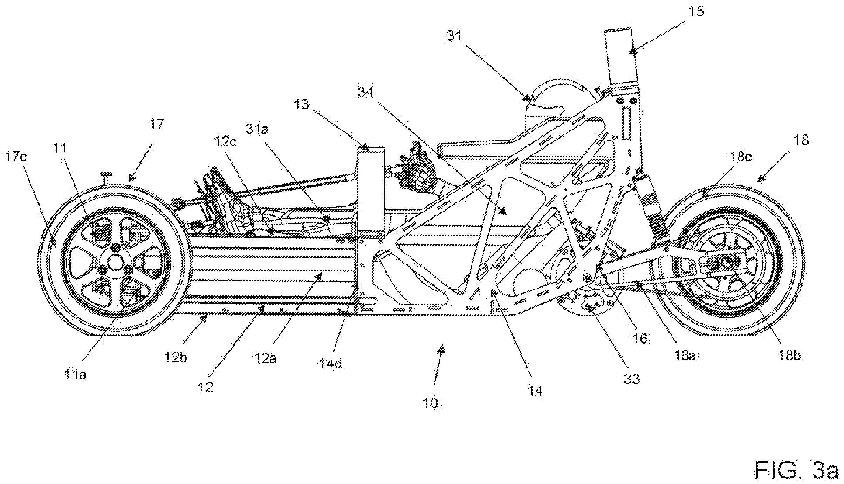

- la figure 3a représente une vue de côté du châssis de la monoplace 3 roues,

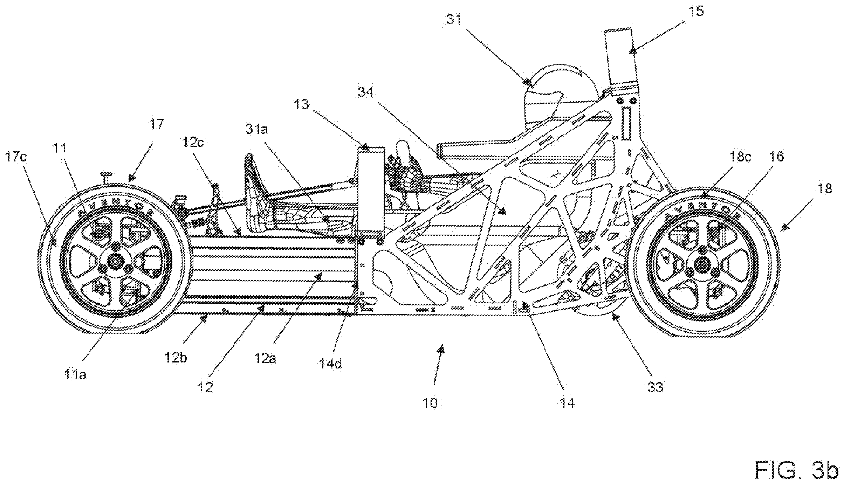

- la figure 3b représente une vue de côté du châssis de la monoplace 4 roues,

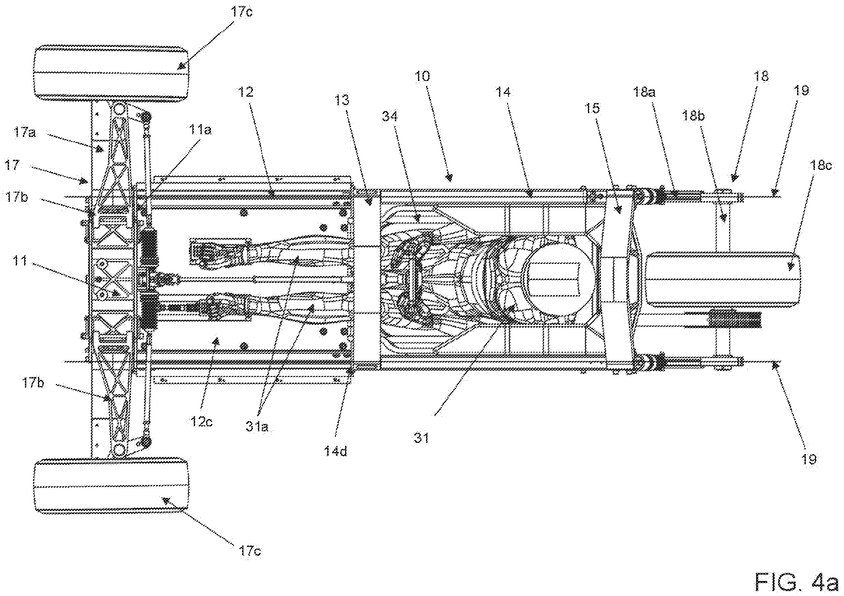

- la figure 4a représente une vue de dessus du châssis de la monoplace 3 roues,

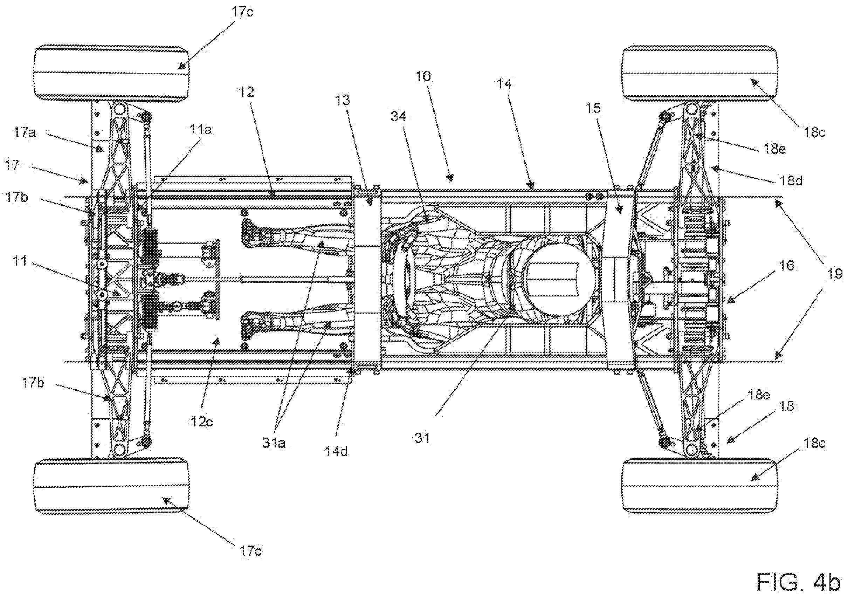

- la figure 4b représente une vue de dessus du châssis de la monoplace 4 roues,

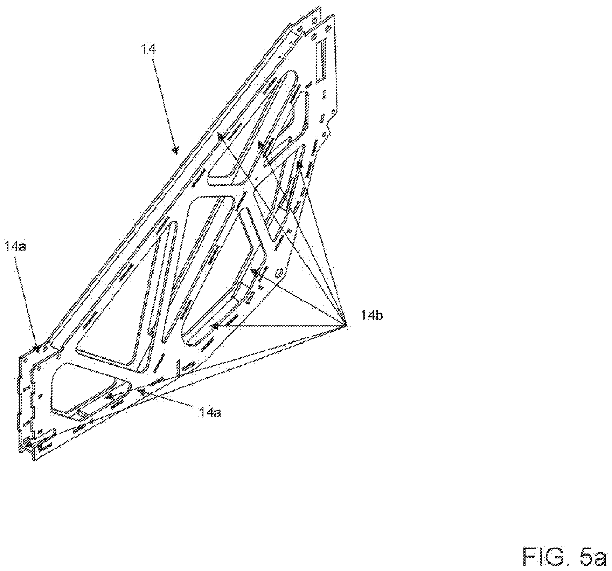

- la figure 5a représente une vue en perspective du flanc de la cellule de survie réalisé en plaques aluminium,

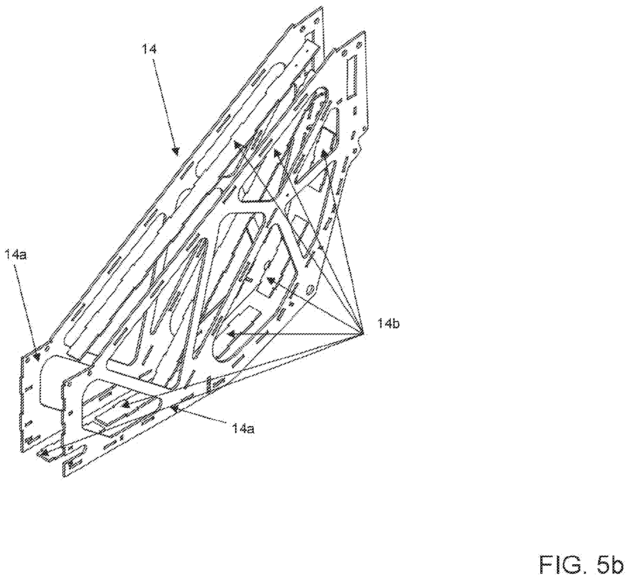

- la figure 5b représente une vue éclatée du flanc de la cellule de survie réalisé en plaques aluminium,

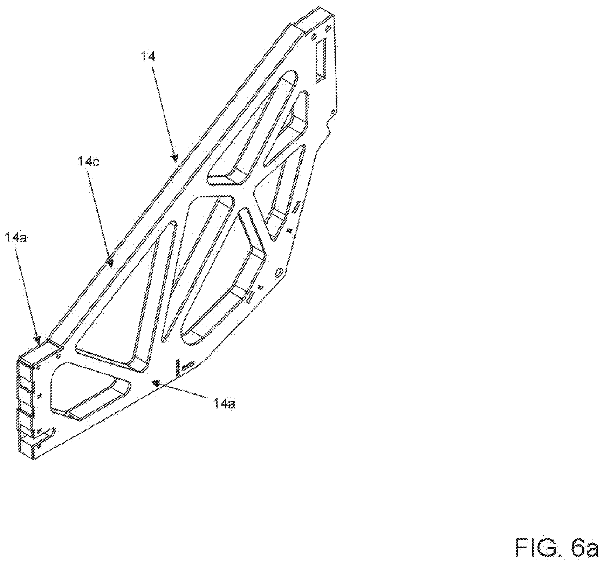

- la figure 6a représente une vue en perspective du flanc de la cellule de survie réalisé en plaques sandwich polymère,

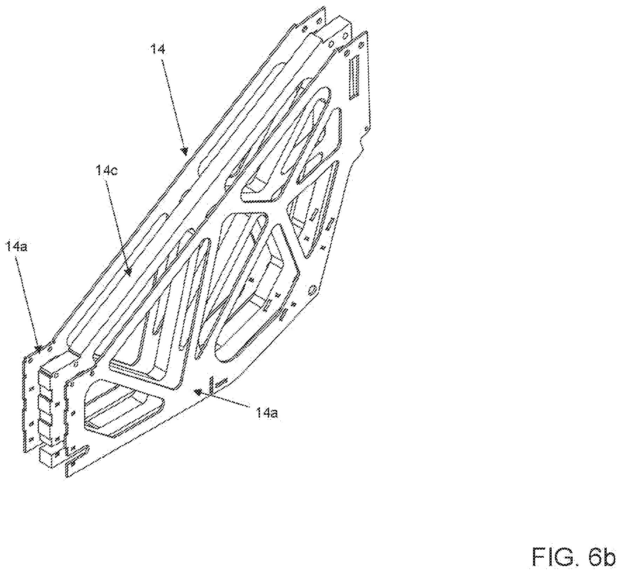

- la figure 6b représente une vue éclatée du flanc de la cellule de survie réalisé en plaques sandwich polymère,

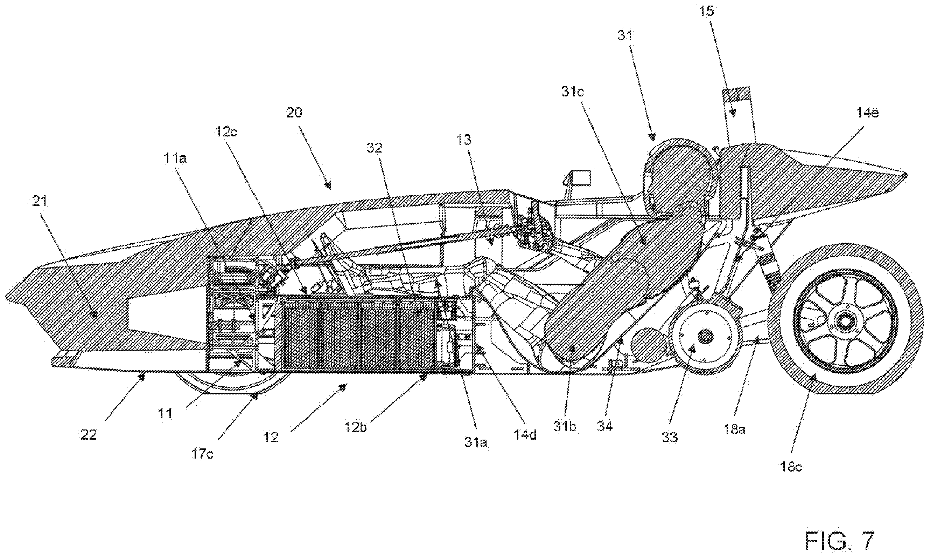

- la figure 7 représente une vue en coupe longitudinal du châssis de la monoplace 3 roues,

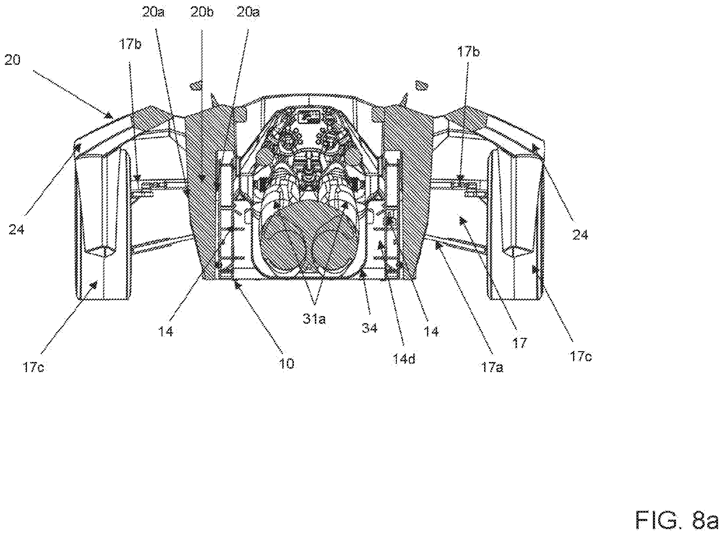

- la figure 8a représente une vue en coupe transversale au niveau du bassin du pilote du châssis de la monoplace 3 roues,

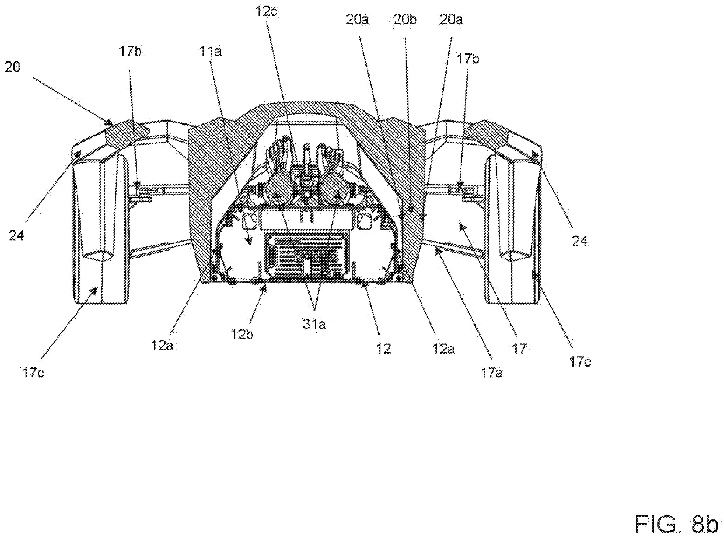

- la figure 8b représente une vue en coupe transversale au niveau des genoux du pilote du châssis de la monoplace 3 roues.

L'invention ne se limite cependant pas aux exemples illustrés et aux modes de réalisation décrits dans le présent document mais est susceptible d'être modifiée dans le cadre du domaine défini par les revendications.

En référence aux figures, le véhicule comprend un châssis 10, un habitacle, une batterie 32 et une carrosserie 20. Le châssis 10 comporte un berceau avant 11, une poutre centrale 12, un arceau secondaire 13, des flancs de cellule 14, un arceau principal 15 et un berceau arrière 16. Les éléments du train roulant avant 17, notamment la lame de suspension avant 17a, les trapèzes avant 17b et les roues avant 17c, sont rattachés directement ou indirectement audit berceau avant 11. Les éléments du train roulant arrière 18 sont rattachés directement ou indirectement audit berceau arrière 16. Ces éléments sont différents pour la monoplace 3 roues et la monoplace 4 roues. Le train roulant arrière 18 de la monoplace 3 roues est constitué de bras oscillants 18a, d'un axe arrière 18b et d'un roue arrière 18c. Le train roulant arrière 18 de la monoplace 4 roues est constitué d'une lame de suspension 18d, de trapèzes arrières 18e et de roues arrières 18c. Lesdits berceaux avant 11, poutre centrale 12, arceau secondaire 13, flancs de cellule 14, arceau principal 15, train roulant avant 17 peuvent être similaires pour les monoplaces 3 et 4 roues. Lesdits berceaux arrière 16 et train roulant arrière 18 sont différents.

Selon un premier mode de réalisation, lesdits flancs de cellule 14 sont constitués de deux plaques longitudinales latérales 14a en aluminium ou composite avancé et de plaques transversales 14b en aluminium ou composite avancé les reliant. Lesdites plaques sont soudées ou collées les unes avec les autre, formant un ensemble solidaire de type poutre ou cage, possédant un grand moment d'inertie, et donc une rigidité importante en flexion, en torsion comme en compression. Le fait d'avoir un espace sans matière au centre rend cet ensemble léger.

Selon un second mode de réalisation, lesdits flancs de cellule 14 sont constitués de deux plaques longitudinales latérales 14a en aluminium ou composite avancé et d'une plaque longitudinale centrale 14c fabriquée dans un matériau possédant une faible masse volumique. De façon avantageuse mais non limitative, ce matériau est une mousse de polymère. Lesdites plaques sont soudées ou collées les unes avec les autre, formant un ensemble solidaire de type sandwich, possédant un grand moment d'inertie, et donc une rigidité importante en flexion, en torsion comme en compression. Le fait d'avoir un matériau à faible masse volumique constituant la plaque longitudinale centrale 14c, rend cet ensemble léger.

Lesdits berceau avant 11, poutre centrale 12, arceau secondaire 13, arceau principal 15 et berceau arrière 16 peuvent être, tout comme lesdits flancs de cellule 14, constitués d'ensembles poutre, cage ou sandwich, les rendant rigides et légers.

Ces éléments ainsi conçus et assemblés les uns aux autres pour former deux plans longitudinaux 19 ininterrompus reliant le train roulant avant 17 et le train roulant arrière 18. Lorsqu'un effort vertical ou longitudinal est appliqué auxdites roues avant 17c, il est transmis aux flancs de poutre centrale 12a, audits flancs de cellule 14, puis, dans le cas de la monoplace 3 roues auxdits bras oscillants 18a. Lorsqu'un effort vertical ou longitudinal est appliqué auxdites roues arrière 18c, il est transmis à l'avant par les mêmes dits plans longitudinaux 19 mais en chemin inverse. Ces éléments étant très rigides du fait de leur conception en poutre, cage ou sandwich, le châssis 10 forme ainsi un ensemble très rigide en flexion longitudinale, préservant le pilote 31 ainsi que ses jambes 31a de toute déformation pouvant lui porter atteinte lors de tonneaux ou de crashs.

Lesdits plans longitudinaux 19 gauche et droite sont enfin reliés l'un à l'autre par des éléments transversaux tels que l'opercule avant 11a de la poutre centrale 12, la plaque inférieure 12b de la dite poutre centrale 12, la plaque supérieure 12c de la dite poutre centrale 12, l'opercule arrière 14d de la poutre centrale 12, le arceau secondaire 13, le arceau principal 15 et la plaque dorsale 14e, évitant le flambage des éléments desdits plans longitudinaux 19 et renforçant donc la rigidité générale dudit châssis 10.

Dans la monoplace 3 roues et la monoplace 4 roues, les éléments suspendus non structurel présentant la masse la plus importante sont le pilote 31, la batterie 32 et le moteur 33. Ces éléments ont donc une influence directe sur le comportement des véhicules sur piste et doivent être placés de façon à faciliter la conduire. Le pilote 31 est installé dans le baquet 34, lui-même installé entre lesdits flancs de cellule 14, l'opercule arrière 14d et la plaque dorsale 14e. Le bassin 31b dudit pilote 31 est positionné le plus bas possible. Le buste 31c dudit pilote 31 est également positionné le plus bas possible tout en conservant le champ de vision nécessaire. La batterie 32 est positionnée le plus bas possible dans la poutre centrale 12, devant le bassin 31b et sous lesdites jambes 31a du pilote 31. Le moteur 33 est positionné le plus bas possible derrière l'habitacle Cette configuration présente plusieurs avantages :
Le fait de positionner lesdits éléments de masse importante le plus bas possible dans la monoplace permet de positionner le centre de gravité de l'ensemble le plus bas possible. Ainsi, lorsque la monoplace est dans un virage, les forces centrifuges auront moins tendance à faire basculer la voiture sur le côté par rapport à une conception fixant le centre de gravité plus haut.

La batterie 32 étant de préférence montée mobile en translation dans la poutre constituant le châssis 12. Cette fonctionnalité permet de tenir compte de la masse du pilote 31 en en disposant la batterie dans un endroit qui assure une disposition optimale de la masse totale résultant. Selon les souhaits du pilote, et en fonction de sa masse, la batterie peut être déplacée d'avant en arrière pour rendre le comportement de la monoplace survireuse ou sous vireuse.

Le fait de répartir lesdits éléments de masse importante sur toute la longueur de la monoplace permet de conserver un meilleur comportement de conduite, le transfert de masse étant moins important et le centre de gravité se retrouvant confondu avec l'axe de rotation.

Le fait de positionner la batterie 32 à l'avant dudit bassin 31b dudit pilote 31 évite tout risque que la batterie 32 écrase le pilote 31 en avant lors d'un crash avant. Cette architecture présente donc un avantage en termes de sécurité.

La batterie ainsi positionnée à proximité du nez de la monoplace ou une prise d'air extérieure 21, 22 a été aménagée. L'air frais conduit à l'avant de la voiture peut ainsi avantageusement circuler dans la poutre châssis autour du caisson de la batterie 12,12b et refroidir les cellules 32, autour du pilote puis être forcé par des extracteurs vers l'arrière de la voiture en passant par un ou des échangeurs air eau qui refroidissement par un circuit d'eau l'électronique, le moteur la poutre 12 a du châssis.

La carrosserie 20 est réalisée en bio-polymères ou en polymères recyclable. Les polymères sont dits « bio » lorsqu'ils sont issus entièrement ou partiellement de ressources renouvelables, telles que l'huile de ricin, la betterave, la canne à sucre ou autres. Ceci permet à la carrosserie 20 d'avoir un impact faible sur l'environnement : les bio-polymères sont moins polluants à produire que les polymères issus de l'industrie pétrolière, et les matériaux recyclables permettent de multiples utilisations d'un polymère pour une consommation de matière première et une polymérisation du matériau unitaires, donc une pollution globale moins importante sur le cycle de vie complet de la matière.

La carrosserie 20 est moulée dans un thermoplastique translucide diffusant une lumière interne à celle-ci. Ce rétro-éclairage est favorablement réalisé par l'emploi de LEDs placées à l'intérieur de la carrosserie 20. En agissant sur l'alimentation des LEDs, on peut ainsi modifier la couleur diffusée par la carrosserie 20. La diffusion extérieure des couleurs est réalisée via un code couleur défini et donne des renseignements sur le véhicule, sur le pilote, et/ou sur l'enthousiasme des spectateurs qui suivent la course. L'alimentation de ces LEDs, et donc la couleur de la carrosserie, peut être modifiée par des signaux venant des organes du véhicule (moteur, batterie, frein ou autre) ou par des signaux venant de l'extérieur. Ces signaux peuvent être de façon non limitative envoyés par des spectateurs via ondes radios, Hertziennes, Wifi, GSM ou bluetooth afin d'apporter soutient et encouragement au pilote engagé dans la course. Les spectateurs et ses concurrents pourront voir en temps réel si le pilote accélère, s'il freine, ou s'il récupère de l'énergie (le moteur fonctionne en générateur pour recharger les batteries). L'intensité de la transmission lumineuse correspond à l'intensité de la commande du pilote. De même pourront être transmis le niveau d'énergies de la batterie, le classement dans la course et l'avis global des spectateurs (soutiens, encouragement) ainsi que des messages publicitaires. Ceci a pour but de rendre les courses plus interactives et plus spectaculaires.

Pour une monoplace électrique, le fait que la carrosserie 20 entourant le pilote 24 soit en polymère électriquement isolant améliore la sécurité

La carrosserie 20 est de préférence constituée d'un faible nombre de pièce assemblée avec des moyens simples. Elle peut être monobloc ou avoir un nez 21 ou un fond de nez 22 séparés pour permettre l'intégration d'éléments techniques à l'intérieur ou une fabrication plus simple. La carrosserie 20 peut être la même pour les modèles 3 et 4 roues. Seule un carénage roue arrière 23 peut être ajouté à l'arrière de la 4 roues pour caréner les 2 roues arrière. Les 2 carrosseries peuvent également être complètement différentes. Le faible nombre de pièces et l'utilisation d'un matériau unique pour produire ces pièces, diminue encore son impact écologique et facilite son recyclage.

De même, sur un même châssis, des carrosseries de couleurs de base différentes ou de formes sensiblement différentes peuvent être montées.

Les pièces de la carrosserie 20 sont réalisées en roto-moulage ou roto-moussage afin d'apporter plus de sécurité audit pilote 31. Favorablement, la carrosserie sera réalisée en double paroi et moussée à l'intérieur. La rigidité dudit châssis 10 empêche celui-ci de se déformer et donc de blesser le pilote 31 par intrusion. Cependant, en cas de choc, les pièces souples tri couche de la carrosserie permettent d'absorber l'énergie par en se déformant et limite la décélération subie par le pilote 31 dans le baquet 34. Les éléments d'absorption de choc sont liés au châssis afin de réduire la décélération dans la cage de survie. Le roto-moulage ou le roto-moussage permettent de réaliser des parois épaisses. Dans ce cas, la peau 20a des parois de la carrosserie 20 est compacte. Le cœur 20b des parois de la carrosserie 20 est constitué d'un seul polymère moussé. Cette épaisseur importante apporte un grand moment d'inertie aux parois de la carrosserie, lui permettant d'absorber plus d'énergie lors des chocs et donc d'amortir la décélération dudit pilote 31. La présence de matière moussée, donc possédant une faible masse volumique, dans le cœur 20b des parois de la carrosserie 20, ou l'absence totale de matière, permet de diminuer la masse totale de la carrosserie 20 malgré son volume extérieur important.

La carrosserie 20 est équipée d'ailes de protection 24 placées de chaque côté de la cellule de survie dudit pilote 31. Lesdites ailes de protection 24 possèdent des parois épaisses telles que décrites ci-dessus, offrant une protection supplémentaire audit pilote 31 en absorbant l'énergie par déformation en se pliant autour de la tête du pilote lors des crashs latéraux ou le chevauchement d'un autre monoplace qui passerai au dessus. Leurs géométries évitent aux voitures en course de monter les unes sur les autres. Elles couvrent en effet lesdites roues avant 17c et sont plus hautes que lesdits nez 22. Ceci représente donc une sécurité nouvelle pour le pilote 31.

L'emploi de matériaux souples et ductiles plutôt que de composites très rigides à très faible élongation à la rupture permet à la carrosserie 20 de se déformer sans rupture, sans éclatement et sans fragmentation en cas de choc. L'emploi de ces polymères flexibles est rendu possible par la rigidité dudit châssis 10. La carrosserie 20 a ici principalement une fonction d'absorption d'énergie de choc pour la sécurité et d'aérodynamisme.

## Revendications

1. Véhicule monoplace électrique comprenant un châssis (10), un habitacle avec un baquet (34) destiné à recevoir un pilote, une batterie (32) disposée dans un élément du châssis (10) et se situant sous l'habitacle, un moteur (33) et une carrosserie (20), **caractérisée par le fait que** la batterie (32) est positionnée dans une poutre centrale et structurelle (12) du châssis, située sous la partie de l'habitacle dans laquelle sont disposées les jambes (31a) du pilote (31) en position de conduite, ledit baquet (34) et ladite batterie (32) étant positionnés le plus bas possible, ladite batterie (32) étant dans la poutre centrale et en outre placée devant le baquet (34) de façon à se trouver devant le bassin, sous les jambes et les pieds du pilote une fois celui-ci installé dans le baquet (34) en position de conduite.

2. Véhicule selon la revendication 1 dans lequel la batterie (32) est montée mobile en translation le long de la poutre centrale et structurelle du châssis (12), de manière à ajuster la répartition des masses entre l'axe avant et arrière en fonction de la masse du pilote et de son souhait sur le comportement survireur, sous-vireur ou neutre du véhicule.

3. Véhicule selon l'une des revendications 1 ou 2 dans lequel le moteur (33) est positionné derrière l'habitacle.

4. Véhicule selon l'une des revendications 1 à 3, **caractérisé en ce que** le châssis (10) est constitué d'un ensemble d'éléments poutre ou sandwich.

5. Véhicule selon la revendication 4, **caractérisé en ce que** des éléments poutre et/ou sandwich sont alignées pour relier un train roulant avant (17) et un train roulant arrière (18) afin de former deux plans longitudinaux (19) rigides, l'arceau principal (15) reliant lesdits plans (19) gauche et droite.

6. Véhicule selon la revendication 5, **caractérisé en ce que** des éléments de structure relient les deux plans longitudinaux (19) gauche et droite afin de rigidifier le châssis (10).

7. Véhicule selon l'une quelconque des revendications précédentes, **caractérisé en ce que** l'habitacle est entouré d'éléments poutre et/ou sandwich, formant une cellule de sécurité rigide.

8. Véhicule selon l'une quelconque des revendications précédentes, **caractérisé en ce qu'**au moins 90 % des éléments qui le constitue peuvent être indifféremment utilisés dans un véhicule à 3 ou 4 roues.

9. Véhicule selon l'une quelconque des revendications précédentes, **caractérisé en ce que** la carrosserie (20) est réalisée en un seul et unique polymère, p.ex. un bio-polymère d'origine naturelle ou un polymère provenant d'origine naturelles.

10. Véhicule selon l'une quelconque des revendications précédentes dans lequel la carrosserie (20) est réalisée avec un matériau thermoplastique isolant électrique et recyclable.

11. Véhicule selon la revendication 10 dans lequel carrosserie (20) est réalisée avec un matériau thermoplastique recyclable moulé en double coque et intégrant une mousse réalisée dans le même polymère.

12. Véhicule selon l'une quelconque des revendications précédentes dans lequel la carrosserie (20) intègre des ailes de protection (24) autour de la cellule de survie dudit pilote (31) afin d'absorber l'énergie provenant de chocs latéraux par déformation.

13. Véhicule selon l'une quelconque des revendications précédentes dans lequel la carrosserie (20) est constituée d'une à trois pièces souples isolantes électriquement.

14. Véhicule selon l'une quelconque des revendications précédentes dans lequel la carrosserie (20) est transparente ou translucide, de manière à permettre la transmission d'informations visuelles à travers ses parois, de l'intérieur du véhicule ou vice-versa.

15. Véhicule selon la revendication 14 dans lequel les informations vers l'extérieur du véhicule concernent des indications sur le niveau d'énergie de la batterie (32), la position du pilote (31) dans la course, sur la popularité de la monoplace, sur des crédits de satisfaction à son pilote (31), sur les actions de pilotage (p.ex. accélération ou freinage) ou si le moteur (33) fonctionne en récupération d'énergie.

16. Véhicule selon la revendication 14 ou 15 comprenant des moyens de de télécommunication bidirectionnelles entre le véhicule et des personnes externes, pour permettre p.ex. à des spectateurs d'envoyer des signaux qui modifient le rétro-éclairage du véhicule.

## Patentansprüche

1. Elektrisches Einsitzerfahrzeug umfassend ein Fahrgestell (10), einen Fahrgastinnenraum mit einer Verschalung (34) zur Aufnahme eines Piloten, eine Batterie (32), die in einem Element des Fahrgestells (10) angeordnet ist und sich unter dem Fahrgastinnenraum befindet, einen Motor (33) und eine Karosserie (20), **dadurch gekennzeichnet, dass** die Batterie (32) in einer mittleren und strukturellen Säule (12) des Fahrgestells positioniert ist, die sich unter dem Abschnitt des Fahrgastinnenraums befindet, in dem die Beine (31a) des Piloten (31) in Fahrposition angeordnet sind, wobei die Verschalung (34) und die Batterie (32) so niedrig wie möglich positioniert sind, wobei sich die Batterie (32) so in der mittleren Säule befindet und ferner vor der Verschalung (34) platziert ist, dass sie sich vor dem Becken, unter den Beinen und den Füßen des Piloten befindet, sobald dieser in der Verschalung (34) in Fahrposition sitzt.

2. Fahrzeug nach Anspruch 1, wobei die Batterie (32) translatorisch beweglich entlang der mittleren und strukturellen Säule des Fahrgestells (12) gelagert ist, um die Verteilung der Massen zwischen der Vorder- und Hinterachse je nach der Masse des Piloten und dem von ihm gewünschten Übersteuerungs-, Untersteuerungs- oder neutralen Verhalten des Fahrzeugs einzustellen.

3. Fahrzeug nach einem der Ansprüche 1 oder 2, wobei der Motor (33) hinter dem Fahrgastinnenraum positioniert ist.

4. Fahrzeug nach einem der Ansprüche 1 bis 3, **dadurch gekennzeichnet, dass** das Fahrgestell (10) von einer Anordnung von Säulen- oder Sandwichelementen gebildet ist.

5. Fahrzeug nach Anspruch 4, **dadurch gekennzeichnet, dass** die Säulen- und/oder Sandwichelemente so ausgerichtet sind, dass sie ein vorderes Fahrwerk (17) und ein hinteres Fahrwerk (18) verbinden, um zwei starre Längsebenen (19) zu bilden, wobei der Hauptbügel (15) die linke und die rechte Ebene (19) verbindet.

6. Fahrzeug nach Anspruch 5, **dadurch gekennzeichnet, dass** Strukturelemente die zwei Längsebenen (19), die linke und die rechte, verbinden, um das Fahrgestell (10) zu versteifen.

7. Fahrzeug nach einem der vorhergehenden Ansprüche, **dadurch gekennzeichnet, dass** der Fahrgastinnenraum von Säulen- und/oder Sandwichelementen umgeben ist, die eine steife Sicherheitszelle bilden.

8. Fahrzeug nach einem der vorhergehenden Ansprüche, **dadurch gekennzeichnet, dass** wenigstens 90 % der Elemente, die es bildet, in einem Fahrzeug mit 3 oder 4 Rädern anders genutzt werden können.

9. Fahrzeug nach einem der vorhergehenden Ansprüche, **dadurch gekennzeichnet, dass** die Karosserie (20) aus einem einzelnen Polymer hergestellt ist, zum Beispiel einem Biopolymer natürlichen Ursprungs oder einem Polymer natürlichen Ursprungs.

10. Fahrzeug nach einem der vorhergehenden Ansprüche, wobei die Karosserie (20) mit einem elektrisch isolierenden und recyclingfähigen thermoplastischen Material hergestellt ist.

11. Fahrzeug nach Anspruch 10, wobei die Karosserie (20) mit einem recyclingfähigen thermoplastischen Material hergestellt ist, das zweischalig geformt ist und einen Schaumstoff enthält, der aus demselben Polymer hergestellt ist.

12. Fahrzeug nach einem der vorhergehenden Ansprüche, wobei die Karosserie (20) Schutzflügel (24) um die Überlebenszelle des Piloten (31) enthält, um die Seitenaufprallenergie durch Verformung zu absorbieren.

13. Fahrzeug nach einem der vorhergehenden Ansprüche, wobei die Karosserie (20) von einem bis drei elektrisch isolierenden, nachgiebigen Teilen gebildet ist.

14. Fahrzeug nach einem der vorhergehenden Ansprüche, wobei die Karosserie (20) durchsichtig oder durchscheinend ist, um die Übertragung visueller Informationen durch seine Wände vom Inneren des Fahrzeugs oder umgekehrt zu gestatten.

15. Fahrzeug nach Anspruch 14, wobei die Informationen zum Äußeren des Fahrzeugs Angaben zum Energiestand der Batterie (32), zur Position des Piloten (31) im Rennen, zur Beliebtheit des Einsitzers, zu Zufriedenheits-Credits an seinen Piloten (31), zu den Steueraktionen (zum Beispiel Beschleunigen oder Bremsen), oder ob sich der Motor (33) im Energierückgewinnungsbetrieb befindet, betreffen.

16. Fahrzeug nach Anspruch 14 oder 15, umfassend bidirektionale Telekommunikationsmittel zwischen dem Fahrzeug und externen Personen, um es zum Beispiel Zuschauern zu gestatten, Signale zu senden, die die Rückbeleuchtung des Fahrzeugs verändern.

## Claims

1. Electric single-seater vehicle comprising a chassis (10), a passenger compartment with a bucket seat (34) intended to accommodate a driver, a battery (32) disposed in an element of the chassis (10) and situated beneath the passenger compartment, a motor (33) and a bodywork (20), **characterized by** the fact that the battery (32) is positioned in a central structural beam (12) of the chassis, situated beneath the part of the passenger compartment in which the legs (31a) of the driver (31) are disposed when the driver is in the driving position, said bucket seat (34) and said battery (32) being positioned as low as possible, said battery (32) being in the central beam and also placed in front of the bucket seat (34) so as to be located in front of the pelvis and beneath the legs and feet of the driver once he or she is installed in the bucket seat (34) in the driving position.

2. Vehicle according to Claim 1, wherein the battery (32) is mounted so as to be able to move in translation along the central structural beam of the chassis (12), so as to adjust the distribution of the masses between the front and rear axles depending on the mass of the driver and his or her desire regarding the oversteer, understeer or neutral behaviour of the vehicle.

3. Vehicle according to either of Claims 1 and 2, wherein the motor (33) is positioned behind the passenger compartment.

4. Vehicle according to one of Claims 1 to 3, **characterized in that** the chassis (10) is made up of an assembly of beam or sandwich elements.

5. Vehicle according to Claim 4, **characterized in that** beam and/or sandwich elements are aligned so as to connect a front running gear (17) and a rear running gear (18) in order to form two rigid longitudinal planes (19), the principal roll structure (15) connecting said left and right planes (19).

6. Vehicle according to Claim 5, **characterized in that** structural elements connect the two left and right longitudinal planes (19) in order to stiffen the chassis (10) .

7. Vehicle according to any one of the preceding claims, **characterized in that** the passenger compartment is surrounded by beam and/or sandwich elements, forming a rigid safety cell.

8. Vehicle according to any one of the preceding claims, **characterized in that** at least 90% of the elements that make it up can be used equally in a three- or four-wheeled vehicle.

9. Vehicle according to any one of the preceding claims, **characterized in that** the bodywork (20) is made of a single polymer, e.g. a biopolymer of natural origin or a polymer from natural origins.

10. Vehicle according to any one of the preceding claims, wherein the bodywork (20) is made using an electrically insulating and recyclable thermoplastic material.

11. Vehicle according to Claim 10, wherein the bodywork (20) is made using a recyclable thermoplastic material moulded into a double shell and incorporating a foam made of the same polymer.

12. Vehicle according to any one of the preceding claims, wherein the bodywork (20) incorporates protective wings (24) around the survival cell of said driver (31) in order to absorb the energy coming from lateral impacts by deformation.

13. Vehicle according to any one of the preceding claims, wherein the bodywork (20) is made up of one to three electrically insulating flexible components.

14. Vehicle according to any one of the preceding claims, wherein the bodywork (20) is transparent or translucent, so as to allow visual information to be transmitted through its walls from the inside of the vehicle or vice versa.

15. Vehicle according to Claim 14, wherein the information bound for the outside of the vehicle relates to indications regarding the energy level of the battery (32), the position of the driver (31) in the race, regarding the popularity of the single-seater vehicle, regarding ratings of satisfaction with the driver (31) thereof, regarding the driving actions (e.g. acceleration or braking) or if the motor (33) is operating in energy-recovery mode.

16. Vehicle according to Claim 14 or 15, comprising means for bidirectional telecommunication between the vehicle and people on the outside, so as to allow e.g. spectators to send signals that modify the backlighting of the vehicle.
